# EUROPÄISCHE PATENTSCHRIFT

(11) **EP 3 141 455 B1**
(45) Veröffentlichungstag und Bekanntmachung des Hinweises auf die Patenterteilung: **19.12.2018**
(21) Anmeldenummer: 16187272.6
(22) Anmeldetag: 05.09.2016
(51) Int. Cl.: B62B 3/02

(54) **VORRICHTUNG ZUM TRANSPORT VON STÜCKGÜTERN**
DEVICE FOR TRANSPORTING PIECE GOODS
DISPOSITIF DE TRANSPORT DE MARCHANDISES AU DETAIL

(30) Priorität: 04.09.2015 DE 202015006120 U
(43) Veröffentlichungstag der Anmeldung: 15.03.2017
(73) Patentinhaber: LKE Gesellschaft für Logistik- und Kommunikations- Equipment mbH, 45768 Marl (DE)
(72) Erfinder: Eilders Joachim, 45529 Hattingen (DE)
(74) Vertreter: Rausch Wanischeck-Bergmann Brinkmann

(56) Entgegenhaltungen:
- EP-A1- 2 508 408
- AU-A- 1 348 366
- FR-A1- 2 620 400
- FR-A1- 2 713 577
- FR-A2- 2 355 989
- FR-A5- 2 122 009

## Beschreibung

Die Erfindung betrifft eine Vorrichtung zum Transport von Stückgütern, insbesondere von Paketen oder Briefbehältern, umfassend: zwei Querträger, zwei Seitenwände, wenigstens drei Rollen, und ein Bodenelement, wobei mit jedem Querträger eine Seitenwand verbunden ist, wobei mit jedem Querträger wenigstens eine Rolle verbunden ist, wobei das Bodenelement mit einem der Querträger verbunden ist, wobei die beiden Querträger derart miteinander verbunden sind, dass der Abstand zwischen den Querträgern verändert werden kann, zu welchem Zweck die beiden Querträger durch zwei Längsträger miteinander verbunden sind, wobei jeder Längsträger zwei Abschnitte umfasst, die gelenkig miteinander verbunden sind und wobei jeder Längsträger gelenkig mit den Querträgern verbunden ist, und wobei das Bodenelement gelenkig mit einem der Querträger verbunden und um eine horizontale Achse verschwenkbar ist, wobei das Bodenelement aus einer horizontalen Stellung in eine vertikale Stellung geklappt werden kann.

Vorrichtungen zum Transport von Stückgütern sind in zahlreichen Ausführungen bekannt und werden auch als Rollwagen, Rollcontainer oder Transportwagen bezeichnet. Ein Zielkonflikt bei der Konstruktion derartiger Vorrichtungen besteht darin, dass die Vorrichtungen einerseits ein möglichst großes Ladevolumen aufweisen sollen und andererseits - insbesondere im unbeladenen Zustand - einen möglichst geringen Platzbedarf aufweisen sollen.

Ein Prinzip, um Hand geführte Rollwagen im Leerzustand ineinander schieben zu können, ist von Einkaufswagen in Supermärkten bekannt (siehe z.B. DE 40 30 330 A1).

Zudem sind Rollwagen bekannt, die einen schwenkbaren Grundboden sowie eine schwenkbare Seitenwand aufweisen. Der schwenkbare Grundboden solcher Rollwagen kann zu einer der feststehenden Wände hochgeklappt und die schwenkbare Seitenwand kann anschließend z.B. an die feststehende Rückwand geklappt werden. Die rechteckige Grundfläche des Rollwagens lässt sich auf diese Weise im Leerzustand des Wagens auf eine L-förmige Grundfläche verkleinern, und mehrere solcher eingeklappter Rollwagen können dann platzsparend ineinander geschoben werden (vgl. z.B. JP 2005-132163A).

Ein gattungsgemäßer Rollwagen ist aus der FR 2 122 009 A5 bekannt. Dieser Rollwagen verfügt über Seitenwände, zwischen denen faltbare Stirnwände angeordnet sind. Dabei verfügen die faltbaren Stirnwände jeweils über zwei Abschnitte, die gelenkig miteinander verbunden sind. Eine jede Stirnwand stellt dabei einen oberen Längsträger und einen unteren Längsträger bereit, zwischen denen ein Gitternetz angeordnet ist. Der vorbekannte Rollwagen verfügt des Weiteren über ein Bodenelement, das um eine Längsachse verschwenkbar an einer der Seitenwände angeordnet ist.

Aus der AU 1 348 366 A ist ein mit Laufrollen ausgerüstetes Traggestell bekannt. Dieses Traggestellt verfügt über zwei Rahmenabschnitte, die unter Zwischenordnung von Gelenkarmen miteinander gekoppelt sind. Im ausgeklappten Zustand der Gelenkarme dienen diese der auswechselbaren Aufnahme von Einlegeböden.

Die FR 2 620 400 A1 offenbart einen Containerwagen mit in der Höhe ausziehbaren Seitenwänden. Diese Seitenwände sind in Transportstellung durch an der einen Seitenwand verschwenkbar angeordnete Längsträger beabstandet voneinander angeordnet. An dieser Seitenwand ist des Weiteren verschwenkbar ein Bodenelement angeordnet, das aus einer horizontalen Stellung in eine vertikale Stellung geklappt werden kann.

Die EP 2 508 408 A1 offenbart einen Rollcontainer mit zwei Seitenwänden, zwischen denen ein faltbar ausgebildetes Bodenelement angeordnet ist. Dieses Bodenelement verfügt über zwei Abschnitte, die gelenkig miteinander verbunden sind, welche Abschnitte jeweils anderendseitig verschwenkbar an einer der Seitenwände angeordnet sind.

Vor diesem Hintergrund liegt der Erfindung die Aufgabe zugrunde, eine eingangs beschriebene und zuvor näher erläuterte Vorrichtung derart auszugestalten und weiterzubilden, dass die Vorrichtung im unbeladenen Zustand besonders platzsparend gelagert werden kann, um beim Lagern oder Rücktransport der leeren Vorrichtungen Lager- bzw. Transportvolumen zu sparen.

Diese Aufgabe wird bei einer Vorrichtung nach dem Oberbegriff von Patentanspruch 1 dadurch gelöst, dass die Längsträger in horizontaler Stellung des Bodenelements unterhalb des Bodenelements angeordnet sind, wobei das Bodenelement in Längsrichtung verlaufende Führungen zur Aufnahme der Längsträger aufweist und wobei die Längsträger in vertikaler Richtung versetzt zueinander angeordnet sind.

Eine erfindungsgemäße Vorrichtung zum Transport von Stückgütern kann insbesondere dem Transport von Paketen und Briefbehältern dienen. Die Vorrichtung zeichnet sich zunächst durch zwei Querträger aus, die vorzugsweise in Querrichtung der Vorrichtung verlaufen. Zudem sind zwei Seitenwände vorhanden, die vorzugsweise in vertikaler Richtung und parallel zueinander verlaufen. Weiterhin sind wenigstens drei Rollen vorhanden, wobei auch vier oder mehr Rollen vorhanden sein können. Zudem weist die Vorrichtung ein Bodenelement auf. Mit jedem Querträger ist - mittelbar oder unmittelbar - eine der Seitenwände verbunden. Zudem ist mit jedem der Querträger - mittelbar oder unmittelbar - wenigstens eine Rolle verbunden. Vorzugsweise sind mit jedem Querträger zwei Rollen verbunden. Schließlich ist das Bodenelement mit einem der Querträger und/oder mit einer der Seitenwände verbunden.

Es ist vorgesehen, dass die beiden Querträger derart miteinander verbunden sind, dass der Abstand zwischen den Querträgern verändert werden kann. Durch eine derartige Verbindung wird erreicht, dass die beiden Seitenwände - und die damit verbundenen Querträger - der Vorrichtung zusammengeschoben werden können. Mit anderen Worten liegt der Erfindung die Idee zugrunde, eine Verbindung zwischen den beiden Querträgern einsetzen, die eine veränderliche Länge einnehmen kann. Insbesondere sollen die beiden Querträger derart miteinander verbunden sein, dass die beiden Seitenwände - und die damit verbundenen Querträger - der Vorrichtung parallel zueinander stehend zusammengeschoben und auseinandergezogen werden können.

Es ist vorgesehen, dass die beiden Querträger durch zwei Längsträger miteinander verbunden sind. Die Verbindung durch Längsträger erlaubt eine geringe Masse bei gleichwohl ausreichender Steifigkeit.

Zu dieser Ausgestaltung ist weiter vorgesehen, dass jeder Längsträger wenigstens zwei Abschnitte umfasst, die gelenkig miteinander verbunden sind. Indem die beiden Abschnitte durch ein Gelenk, beispielsweise durch ein Scharniergelenk miteinander verbunden sind, können die Längsträger zusammengeklappt werden.

Zu diesen beiden Ausgestaltungen wird weiter vorgeschlagen, dass jeder Längsträger gelenkig mit einem der Querträger verbunden ist. Indem auch zwischen den Längsträgern und den Querträgern Gelenke, beispielsweise Scharniergelenke, vorgesehen sind, können die beiden Seitenwände auch beim Zusammenklappen der Längsträger ihre parallele Stellung beibehalten.

Im Hinblick auf die Anordnung der Längsträger ist erfindungsgemäß vorgesehen, dass die Längsträger in vertikaler Richtung versetzt zueinander angeordnet sind. Durch den vertikalen Versatz kann beim Zusammenklappen der Längsträger eine Kollision zwischen den Längsträgern vermieden werden. Auf diese Weise können auch sehr lange Längsträger verwendet werden, so dass besonders große Unterschiede zwischen ausgeklappter Länge und eingeklappter Länge der Vorrichtung möglich sind.

Es ist ferner vorgesehen, dass das Bodenelement gelenkig mit einem der Querträger verbunden ist. Bei dem Gelenk kann es sich beispielsweise um ein Scharniergelenk handeln. Durch die gelenkige Verbindung kann das Bodenelement geschwenkt oder geklappt werden.

Zu dieser Ausbildung wird weiter vorgeschlagen, dass das Bodenelement um eine horizontale Achse schwenkbar ist. Durch die horizontale Lage der Achse kann das Bodenelement beispielsweise aus einer horizontalen Stellung in eine vertikale Stellung geklappt oder geschwenkt werden.

Im Hinblick auf das Bodenelement ist erfindungsgemäß vorgesehen, dass das Bodenelement in Längsrichtung verlaufende Führungen zur Aufnahme der Längsträger aufweist. Durch die Führungen wird verhindert, dass die Längsträger bei heruntergeklapptem Bodenelement - beispielsweise durch einen Stoß - versehentlich eingeklappt werden. Auf diese Weise wird die Vorrichtung zuverlässig in ihrer ausgeklappten Form fixiert.

Das Bodenelement kann in weiterer Ausgestaltung der Vorrichtung auch in Querrichtung verlaufende Führungen aufweisen. Diese Führungen können beispielsweise dazu dienen, die Gabelzinken eines Gabelstaplers oder eines Hubwagens einzuführen. Vorzugsweise sind die in Querrichtung verlaufenden Führungen derart angeordnet, dass sie bei einer horizontalen, waagerechten Stellung des Bodenelements unterhalb der Längsträger verlaufen. Auf diese Weise kann erreicht werden, dass sich der Druck der Gabelzinken über die Längsträger möglichst gleichmäßig auf das Bodenelement verteilt.

Eine weitere Ausgestaltung der Vorrichtung sieht eine Rückwand vor, die mit beiden Seitenwänden verbindbar ist. Die Rückwand kann - lösbar oder unlösbar - mit den beiden Seitenwänden verbunden sein. Eine lösbare Verbindung erlaubt einen einfachen Austausch der Rückwand, während eine unlösbare Verbindung eine besonders zuverlässige Anbindung an die Seitenwände ermöglicht.

Zu dieser Ausgestaltung wird weiter vorgeschlagen, dass die Rückwand zwei Wandabschnitte umfasst, die gelenkig miteinander verbunden sind. Durch die gelenkige Verbindung der beiden Wandabschnitte wird eine zusammenklappbare Rückwand erreicht. Auf dieser Weise kann die Vorrichtung auch bei eingebauter Rückwand platzsparend zusammengeschoben werden.

Nach einer weiteren Ausbildung der Vorrichtung ist vorgesehen, dass die Breite der Wandabschnitte der Rückwand etwa der Länge der Abschnitte der Längsträger entspricht. Durch diese Konstruktion kann die Vorrichtung besonders gleichmäßig zusammengeschoben werden. Zudem kann eine Koppelung von Rückwand und Längsträgern realisiert werden, so dass beispielsweise ein Zusammenklappen der Rückwand ein gleichzeitiges Zusammenklappen der Längsträger zur Folge hat.

Eine weitere Ausgestaltung der Vorrichtung sieht einen Griff vor, der mit einer der Seitenwände verbunden ist, insbesondere gelenkig verbunden ist. Durch den Griff kann die Vorrichtung gezogen oder geschoben werden. Eine gelenkige Anbindung hat den Vorteil, dass der Griff flach an eine der Seitenwände geklappt werden kann, so dass mehrere Vorrichtungen dicht nebeneinander gestellt werden können.

Eine Weiterbildung der Vorrichtung umfasst eine Bremseinrichtung, insbesondere eine Feststellbremse, die auf wenigstens eine der Rollen einwirkt und ein Bremspedal und/oder einen Bremsgriff aufweist. Durch die Bremseinrichtung kann die Vorrichtung auch auf abschüssigen Untergründen sicher abgestellt werden, ohne wegzurollen. Auch beim Transport (z.B. in Anhängern oder Aufliegern) kann die Bremseinrichtung zusätzlich zur Transportsicherung eingesetzt werden.

Hierzu wird weiter vorgeschlagen, dass der Bremsgriff der Bremseinrichtung an dem Griff angeordnet ist. Auf diese Weise ist eine besonders bequeme und sichere Bedienung der Bremseinrichtung möglich, bei der die Hände an dem Griff verbleiben können.

Nach einer weiteren Ausbildung der Vorrichtung ist vorgesehen, dass wenigstens eine Rolle als Lenkrolle ausgeführt ist. Durch Lenkrollen kann die Vorrichtung besonders einfach in unterschiedliche Richtungen gerollt werden. Bei einer Vorrichtung mit drei Rollen ist vorzugsweise eine der Rollen als Lenkrolle ausgeführt; bei einer Vorrichtung mit vier Rollen sind vorzugsweise zwei Rollen als Lenkrollen ausgeführt.

Gemäß einer weitere Ausgestaltung der Vorrichtung wird schließlich vorgeschlagen, dass die Vorrichtung eine Deichsel und/oder eine Kupplung zur Kopplung mehrerer Vorrichtungen aufweist. Durch eine Deichsel und eine Kupplung können mehrere Vorrichtungen miteinander verbunden werden und von einer Person oder einem Zugfahrzeug gezogen werden.

Die Erfindung wird nachfolgend anhand einer lediglich ein bevorzugtes Ausführungsbeispiel darstellenden Zeichnung näher erläutert. In der Zeichnung zeigen:
- Fig. 1a:: eine erste Ausgestaltung einer erfindungsgemäßen Vorrichtung zum Transport von Stückgütern in einer Vorderansicht,
- Fig. 1b:: die Vorrichtung aus Fig. 1a in einer Seitenansicht von links,
- Fig. 1c:: die Vorrichtung aus Fig. 1a in einer Rückansicht,
- Fig. 1d:: die Vorrichtung aus Fig. 1a in einer Seitenansicht von rechts,
- Fig. 1e:: die Vorrichtung aus Fig. 1a in einer Draufsicht,
- Fig. 1f:: die Vorrichtung aus Fig. 1a in einer Ansicht von unten,
- Fig. 1g:: die Vorrichtung aus Fig. 1a in einem halb zusammengeschobenen Zustand in einer perspektivischen Ansicht,
- Fig. 1h:: die Vorrichtung aus Fig. 1a in einem ganz zusammengeschobenen Zustand in einer perspektivischen Ansicht,
- Fig. 1i:: die Vorrichtung aus Fig. 1g in einer Draufsicht,
- Fig. 1j:: die Vorrichtung aus Fig. 1h in einer Draufsicht,
- Fig. 2a:: eine zweite Ausgestaltung einer erfindungsgemäßen Vorrichtung zum Transport von Stückgütern in einer Vorderansicht,
- Fig. 2b:: die Vorrichtung aus Fig. 2a in einer Seitenansicht von links,
- Fig. 2c:: die Vorrichtung aus Fig. 2a in einer Rückansicht,
- Fig. 2d:: die Vorrichtung aus Fig. 2a in einer Seitenansicht von rechts,
- Fig. 2e:: die Vorrichtung aus Fig. 2a in einer Draufsicht,
- Fig. 2f:: die Vorrichtung aus Fig. 2a in einer Ansicht von unten,
- Fig. 2g:: die Vorrichtung aus Fig. 2a in einem halb zusammengeschobenen Zustand in einer perspektivischen Ansicht,
- Fig. 2h:: die Vorrichtung aus Fig. 2a in einem ganz zusammengeschobenen Zustand in einer perspektivischen Ansicht,
- Fig. 2i:: die Vorrichtung aus Fig. 2g in einer Draufsicht, und
- Fig. 2j:: die Vorrichtung aus Fig. 2h in einer Draufsicht.

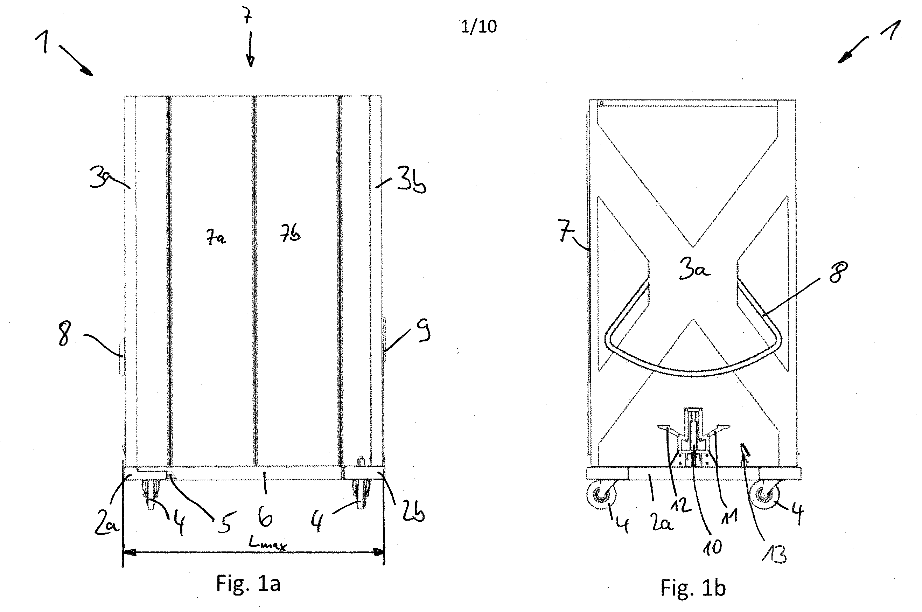

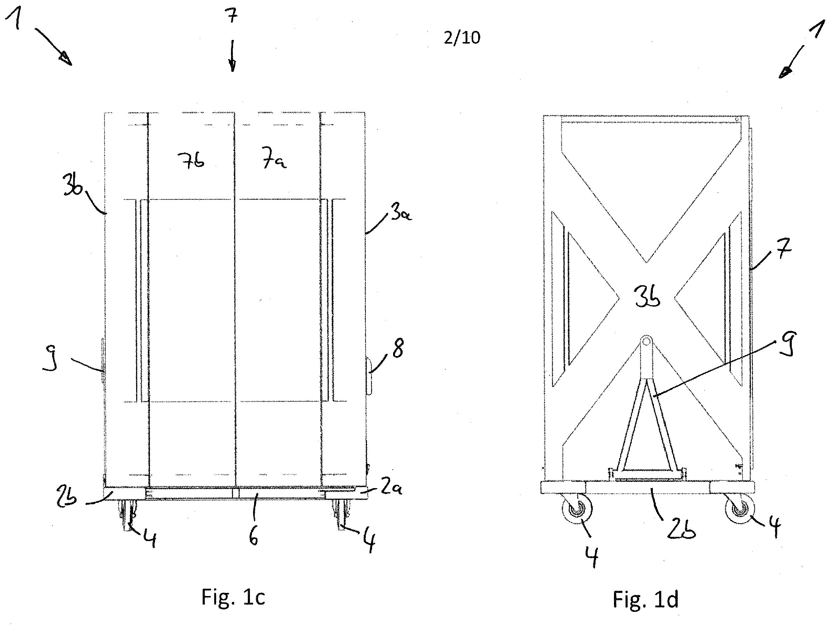

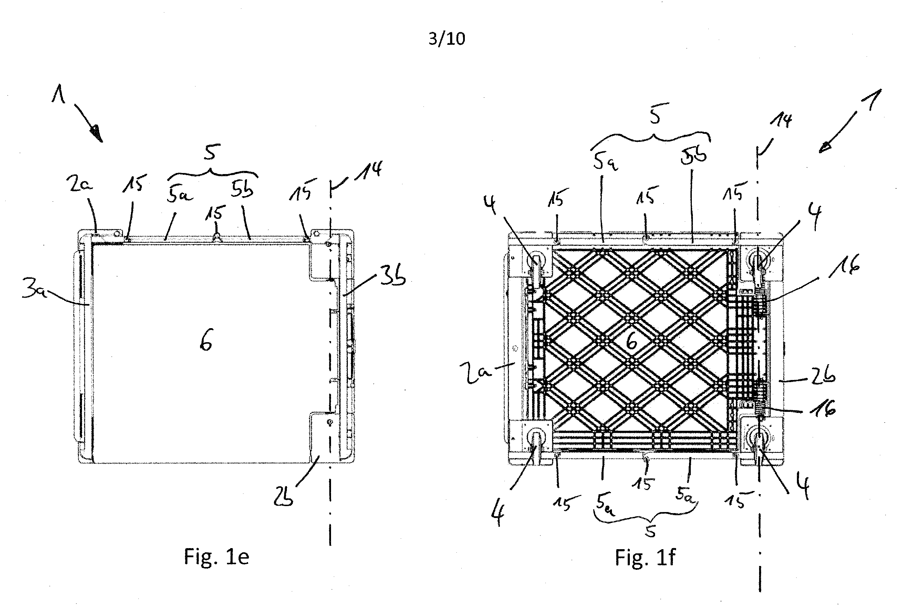

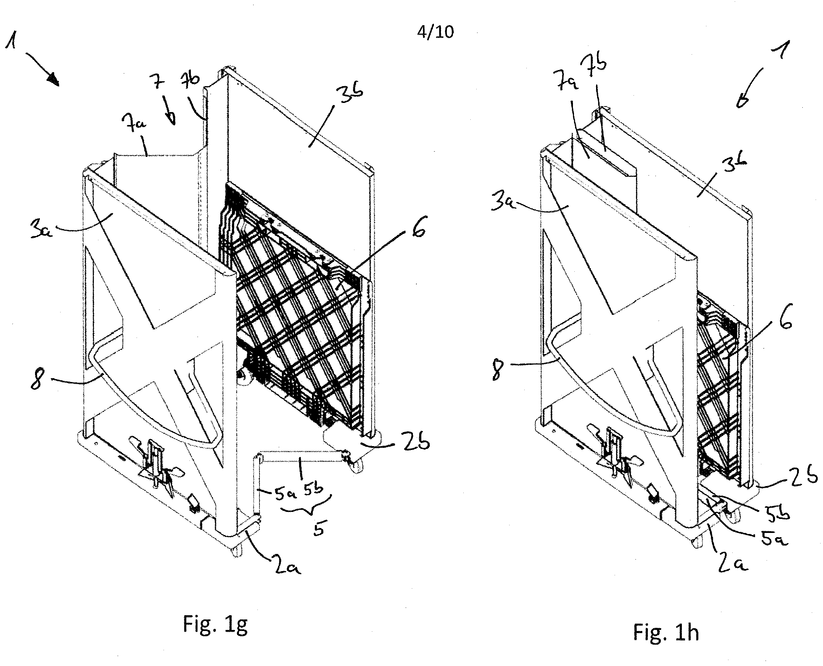

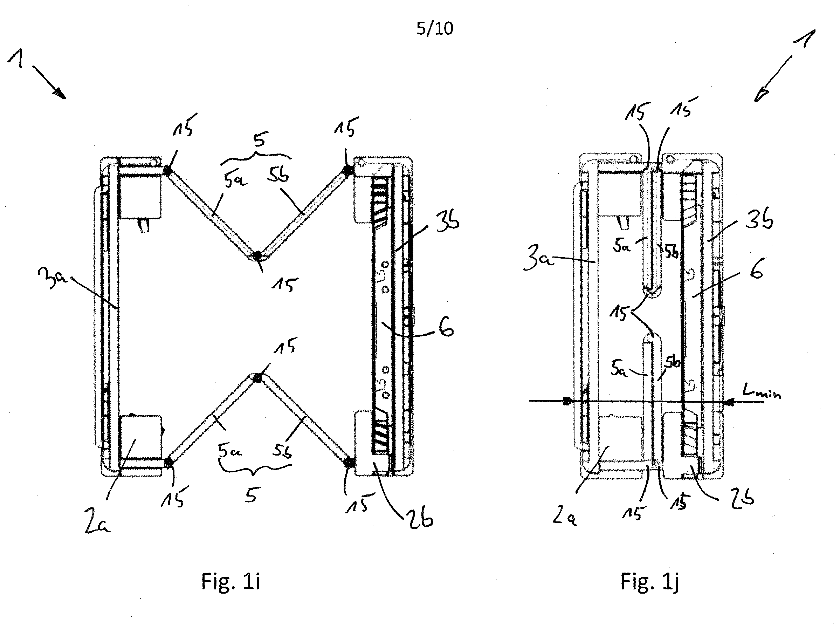

In Fig. 1a ist eine erste Ausgestaltung einer erfindungsgemäßen Vorrichtung 1 zum Transport von Stückgütern in einer Vorderansicht gezeigt. Die Vorrichtung 1 umfasst zwei Querträger 2a, 2b und zwei Seitenwände 3a, 3b. Jeder Querträger 2a, 2b ist mit einer der Seitenwände 3a, 3b verbunden. Zudem umfasst die Vorrichtung 1 vier Rollen 4, wobei mit jedem Querträger 2a, 2b zwei Rollen 4 verbunden sind. Die beiden Querträger 2a, 2b sind durch zwei Längsträger 5 miteinander verbunden, auf die nachfolgend noch genauer eingegangen wird. Die in Fig. 1 gezeigte Vorrichtung 1 umfasst weiterhin ein Bodenelement 6, das gelenkig mit dem rechts dargestellten Querträger 2b verbunden ist. Auf dem links dargestellten Querträger 2a liegt das Bodenelement 6 hingegen lediglich auf, so dass das Bodenelement 6 aus einer horizontalen Stellung in eine vertikale Stellung geklappt werden kann. Die Vorrichtung 1 weist zudem eine Rückwand 7 auf, die zwischen den beiden Seitenwänden 3a, 3b angeordnet ist und mit beiden Seitenwänden 3a, 3b verbunden ist. Die Rückwand 7 umfasst zwei Wandabschnitte 7a, 7b, die gelenkig miteinander verbunden sind. Die Vorrichtung 1 ist an ihrer linken Seitenwand 3a mit einem Griff 8 ausgestattet und an ihrer rechten Seitenwand 3b mit einer Deichsel 9 versehen. Gezeigt ist schließlich die maximale Länge Lₘₐₓ der Vorrichtung 1.

Fig. 1b zeigt die Vorrichtung 1 aus Fig. 1a in einer Seitenansicht von links. Die bereits im Zusammenhang mit Fig. 1a beschriebenen Bereiche der Vorrichtung 1 sind in Fig. 1b mit entsprechenden Bezugszeichen versehen. Die Seitenansicht ermöglicht einen Blick auf die linke Seitenwand 3a. Besonders deutlich erkennbar ist der Griff 8, der mit der Seitenwand 3a verbunden ist. Zudem ist an dem Querträger 2a eine Kupplung 10 vorgesehen, die mit der Deichsel 9 einer weiteren (nicht dargestellten) Vorrichtung zum Transport von Stückgütern verbunden werden kann. Die Kupplung 10 kann über ein Kupplungspedal 11 bedient - also verriegelt und entriegelt - werden. Zudem ist an dem Querträger 2a ein Bremspedal 12 vorgesehen, über das eine (in Fig. 1b nicht dargestellte) Bremseinrichtung bedient werden kann. Weiterhin ist eine Bodenentriegelung 13 vorgesehen, die ebenfalls als Fußpedal ausgebildet ist.

In Fig. 1c ist die Vorrichtung 1 aus Fig. 1a in einer Rückansicht dargestellt. Die bereits im Zusammenhang mit Fig. 1a und Fig. 1b beschriebenen Bereiche der Vorrichtung 1 sind in Fig. 1c mit entsprechenden Bezugszeichen versehen. Die Rückansicht ermöglicht einen Blick auf die Rückwand 7 und die beiden Wandabschnitte 7a, 7b der Rückwand 7. Die beiden Wandabschnitte 7a, 7b sind gelenkig miteinander verbunden, worauf nachfolgend noch detaillierter eingegangen wird.

Fig. 1d zeigt die Vorrichtung 1 aus Fig. 1a in einer Seitenansicht von rechts. Die bereits im Zusammenhang mit Fig. 1a bis Fig. 1c beschriebenen Bereiche der Vorrichtung 1 sind in Fig. 1d mit entsprechenden Bezugszeichen versehen. Die Seitenansicht ermöglicht einen Blick auf die rechte Seitenwand 3b. Deutlich erkennbar ist die Deichsel 9, die gelenkig mit dem Querträger 2b verbunden ist.

In Fig. 1e ist die Vorrichtung 1 aus Fig. 1a in einer Draufsicht gezeigt. Die bereits im Zusammenhang mit Fig. 1a bis Fig. 1d beschriebenen Bereiche der Vorrichtung 1 sind in Fig. 1e mit entsprechenden Bezugszeichen versehen. In der Draufsicht ist die Verbindung zwischen dem Bodenelement 6 und dem rechten Querträger 2b besonders deutlich erkennbar: Das Bodenelement 6 ist um eine Drehachse 14 schwenkbar gelagert, wobei die Drehachse 14 horizontal und in Querrichtung der Vorrichtung 1 (also entlang des Querträgers 2b) verläuft. Weiterhin ist einer der Längsträger 5 erkennbar, der zwei Abschnitte 5a, 5b umfasst. Die gelenkige Lagerung wird durch drei Gelenke 15 erreicht, wobei das erste Gelenk 15 zwischen dem linken Querträger 2a und dem linken Abschnitt 5a des Längsträgers 5 angeordnet ist. Das zweite Gelenk 15 verbindet den linken Abschnitt 5a und den rechten Abschnitt 5b des Längsträgers 5 miteinander. Das dritte Gelenk 15 ist schließlich zwischen dem rechten Querträger 2b und dem rechten Abschnitt 5b des Längsträgers 5 angeordnet. Bei den Gelenken 15 handelt es sich um Scharniergelenke, die um eine vertikal verlaufende Achse schwenkbar sind.

Fig. 1f zeigt die Vorrichtung aus Fig. 1a in einer Ansicht von unten. Die bereits im Zusammenhang mit Fig. 1a bis Fig. 1e beschriebenen Bereiche der Vorrichtung 1 sind in Fig. 1f mit entsprechenden Bezugszeichen versehen. In der Ansicht von unten ist auch der zweite Längsträger 5 erkennbar, der ebenfalls zwei Abschnitte 5a, 5b umfasst. Auch bei dem zweiten Längsträger 5 sind die beiden Abschnitte 5a, 5b über Gelenke 15 miteinander bzw. mit den Querträgern 2a, 2b verbunden. Deutlich erkennbar sind zudem die vier Rollen 4, von denen zwei Rollen 4 an dem linken Querträger 2a und zwei Rollen 4 an dem rechten Querträger 2b befestigt sind. Um das Schwenken des Bodenelements 6 um die Drehachse 14 zu erleichtern, sind zwischen dem Querträger 2b und dem daran gelagerten Bodenelement 6 Torsionsfedern 16 vorgesehen.

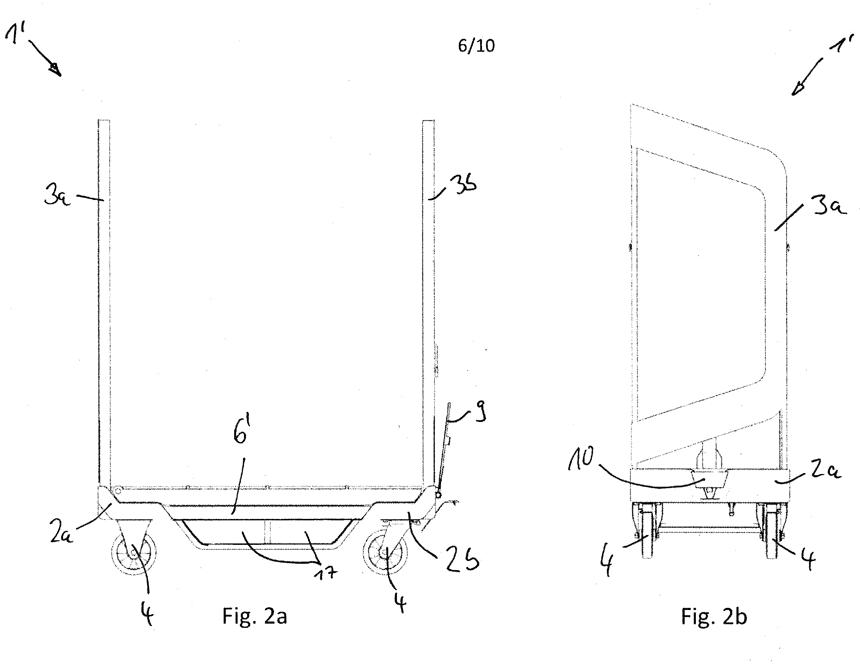

In Fig. 1g ist die Vorrichtung 1 aus Fig. 2a in einem halb zusammengeschobenen Zustand in einer perspektivischen Ansicht dargestellt. Die bereits im Zusammenhang mit Fig. 1a bis Fig. 1f beschriebenen Bereiche der Vorrichtung 1 sind in Fig. 1g mit entsprechenden Bezugszeichen versehen. Der halb zusammengeschobene Zustand wird erreicht, indem zunächst das Bodenelement 6 von der horizontalen Stellung in die vertikale Stellung hochgeklappt wird, so dass es etwa parallel zur rechten Seitenwand 3b verläuft. Anschließend werden die beiden Längsträger 5 und die Rückwand 7 zusammengeklappt.

Fig. 1h zeigt die Vorrichtung 1 aus Fig. 1a in einem ganz zusammengeschobenen Zustand in einer perspektivischen Ansicht. Die bereits im Zusammenhang mit Fig. 1a bis Fig. 1g beschriebenen Bereiche der Vorrichtung 1 sind in Fig. 1h mit entsprechenden Bezugszeichen versehen. Der ganz zusammengeschobene Zustand wird erreicht, indem die beiden Seitenwände 3a, 3b so weit zusammengeschoben werden, dass die beiden Abschnitte 5a, 5b der Längsträger 5 etwa parallel verlaufen.

In ähnlicher Weise verlaufen die beiden Wandabschnitte 7a, 7b der Rückwand 7 parallel.

In Fig. 1i ist die Vorrichtung 1 aus Fig. 1g in einer Draufsicht dargestellt. Die bereits im Zusammenhang mit Fig. 1a bis Fig. 1h beschriebenen Bereiche der Vorrichtung 1 sind in Fig. 1i mit entsprechenden Bezugszeichen versehen. Aufgrund des hochgeklappten Bodenelements 6 ist der Blick auf die unter dem Bodenelement 6 angeordneten Längsträger 5 frei. Die Längsträger 5 sind halb eingeklappt, so dass die Abschnitte 5a, 5b der Längsträger 5 nicht mehr entlang einer Linie angeordnet sind. In Fig. 1i wurde die Rückwand 7 aufgrund der besseren Übersichtlichkeit weggelassen.

Fig. 1j zeigt die Vorrichtung 1 aus Fig. 1h in einer Draufsicht. Die bereits im Zusammenhang mit Fig. 1a bis Fig. 1i beschriebenen Bereiche der Vorrichtung 1 sind in Fig. 1j mit entsprechenden Bezugszeichen versehen. Erkennbar wurden die beiden Seitenwände 3a, 3b so weit zusammengeschoben, dass die beiden Abschnitte 5a, 5b der Längsträger 5 aneinander anliegen und parallel zueinander verlaufen. In dieser Stellung weist die Vorrichtung 1 eine minimale Länge Lₘᵢₙ auf. Vorzugsweise beträgt die minimale Länge Lₘᵢₙ höchstens 40%, insbesondere höchstens 35% oder höchstens 30% der maximalen Länge Lₘₐₓ der Vorrichtung 1 (siehe Fig. 1a).

Fig. 2a zeigt eine zweite Ausgestaltung einer erfindungsgemäßen Vorrichtung 1' zum Transport von Stückgütern in einer Vorderansicht. Die zweite Ausgestaltung der Vorrichtung 1' weist zahlreiche Gemeinsamkeiten mit der ersten Ausgestaltung der Vorrichtung 1 auf, so dass die bereits im Zusammenhang mit Fig. 1a bis Fig. 1j beschriebenen Bereiche der Vorrichtung 1 auch in Fig. 2a mit entsprechenden Bezugszeichen versehen sind. Unterschiede zwischen den beiden Ausgestaltungen liegen beispielsweise darin, dass das Bodenelement 6' bei der zweiten Ausgestaltung zwei Führungen 17 aufweist, die in Querrichtung der Vorrichtung 1' verlaufen und dazu dienen, die Gabelzinken eines Gabelstaplers oder Hubwagens aufzunehmen.

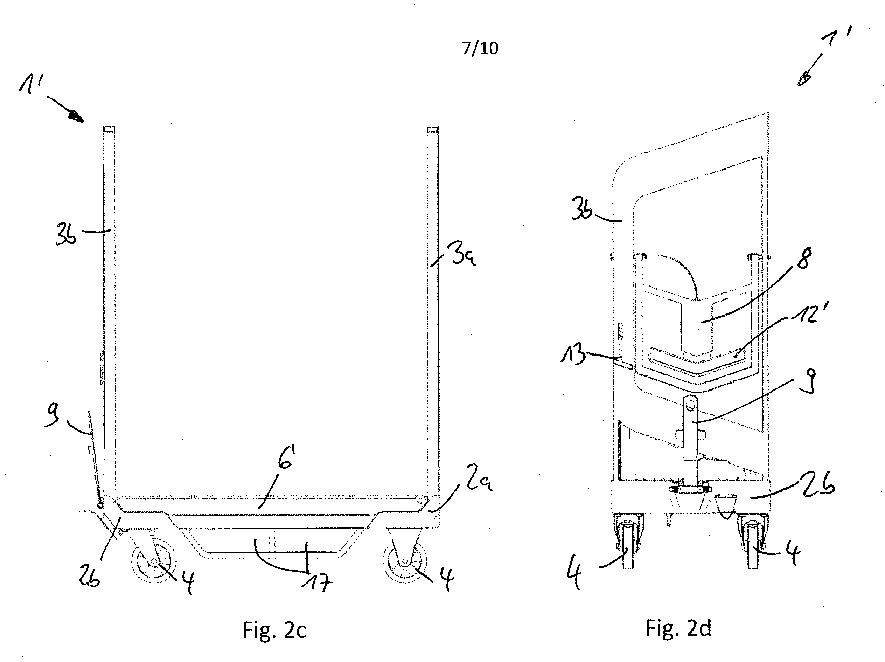

In Fig. 2b ist die Vorrichtung 1' aus Fig. 2a in einer Seitenansicht von links dargestellt. Die bereits im Zusammenhang mit Fig. 1a bis Fig. 2a beschriebenen Bereiche der Vorrichtungen 1,1' sind in Fig. 2b mit entsprechenden Bezugszeichen versehen. Deutlich erkennbar ist eine Kupplung 10, die dem Anschluss einer Deichsel 9 dient, wodurch mehrere Vorrichtung 1' aneinander gekoppelt werden können. Fig. 2c zeigt die Vorrichtung 1' aus Fig. 2a in einer Rückansicht. Die bereits im Zusammenhang mit Fig. 1a bis Fig. 2b beschriebenen Bereiche der Vorrichtungen 1, 1' sind in Fig. 2c mit entsprechenden Bezugszeichen versehen. Bei der zweiten Ausgestaltung der Vorrichtung 1' ist keine Rückwand vorgesehen, so dass zwischen den beiden Seitenwänden 3a, 3b ein Freiraum vorhanden ist.

In Fig. 2d ist die Vorrichtung 1' aus Fig. 2a in einer Seitenansicht von rechts dargestellt. Die bereits im Zusammenhang mit Fig. 1a bis Fig. 2c beschriebenen Bereiche der Vorrichtungen 1,1' sind in Fig. 2d mit entsprechenden Bezugszeichen versehen. Abweichend von der ersten Ausgestaltung werden bei der zweiten Ausgestaltung der Vorrichtung 1' sowohl die Entriegelung des Bodenelements 6' als auch die Bremse per Hand bedient. Hierzu ist ein Bremsgriff 12' vorgesehen, der in den Griff 8 integriert ist. Zudem ist auch die Bodenentriegelung 13 in einer entsprechenden Höhe angeordnet.

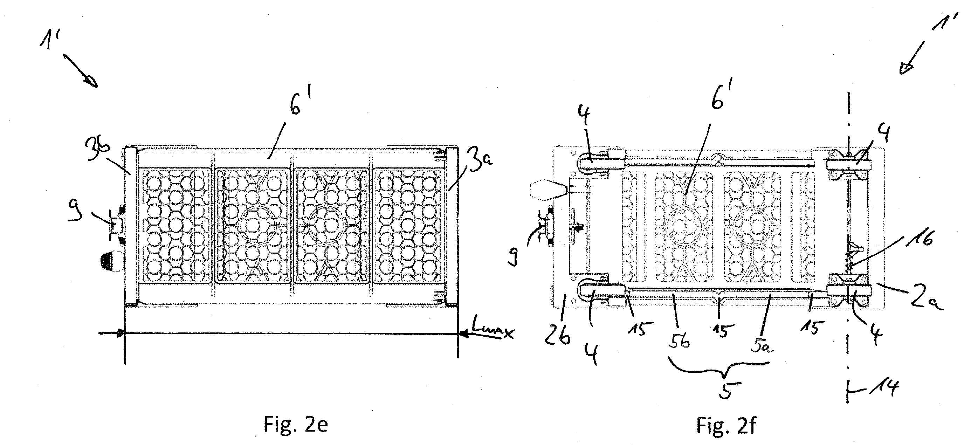

Fig. 2e zeigt die Vorrichtung 1' aus Fig. 2a in einer Draufsicht. Die bereits im Zusammenhang mit Fig. 1a bis Fig. 2d beschriebenen Bereiche der Vorrichtungen 1,1' sind in Fig. 2e mit entsprechenden Bezugszeichen versehen. In der Draufsicht ist die rechteckige Form der Vorrichtung 1' mit einer maximalen Länge Lₘₐₓ erkennbar.

In Fig. 2f ist die Vorrichtung 1' aus Fig. 2a in einer Ansicht von unten dargestellt. Die bereits im Zusammenhang mit Fig. 1a bis Fig. 2e beschriebenen Bereiche der Vorrichtungen 1,1' sind in Fig. 2f mit entsprechenden Bezugszeichen versehen. In der Ansicht von unten sind beide Längsträger 5 erkennbar, die jeweils zwei Abschnitte 5a, 5b umfassen. Auch bei der zweiten Ausgestaltung der Vorrichtung 1' sind die beiden Abschnitte 5a, 5b über Gelenke 15 miteinander bzw. mit den Querträgern 2a, 2b verbunden. Deutlich erkennbar sind zudem die vier Rollen 4, von denen zwei Rollen 4 an dem linken Querträger 2a und zwei Rollen 4 an dem rechten Querträger 2b befestigt sind. Um das Schwenken des Bodenelements 6' um die Drehachse 14 zu erleichtern, ist zwischen dem Querträger 2a und dem daran gelagerten Bodenelement 6' eine Torsionsfeder 16 vorgesehen.

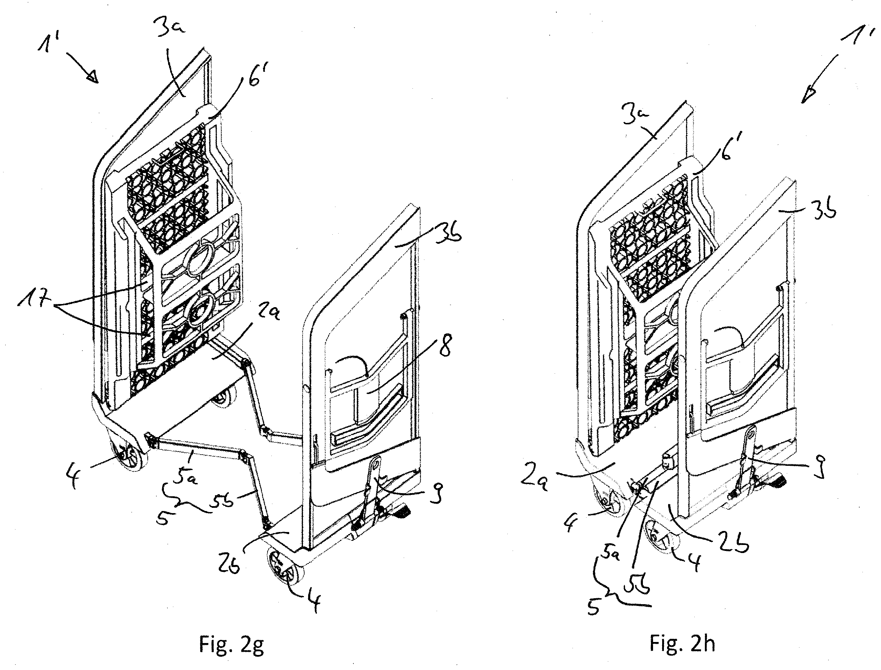

Fig. 2g zeigt die Vorrichtung 1' aus Fig. 2a in einem halb zusammengeschobenen Zustand in einer perspektivischen Ansicht. Die bereits im Zusammenhang mit Fig. 1a bis Fig. 2f beschriebenen Bereiche der Vorrichtungen 1, 1' sind in Fig. 2g mit entsprechenden Bezugszeichen versehen. Der halb zusammengeschobene Zustand wird erreicht, indem zunächst das Bodenelement 6' von der horizontalen Stellung in die vertikale Stellung hochgeklappt wird, so dass es etwa parallel zur linken Seitenwand 3a verläuft. Anschließend werden die beiden Längsträger 5 zusammengeklappt.

In Fig. 2h ist die Vorrichtung aus Fig. 2a in einem ganz zusammengeschobenen Zustand in einer perspektivischen Ansicht dargestellt. Die bereits im Zusammenhang mit Fig. 1a bis Fig. 2g beschriebenen Bereiche der Vorrichtungen 1,1' sind in Fig. 2h mit entsprechenden Bezugszeichen versehen. Der ganz zusammengeschobene Zustand wird erreicht, indem die beiden Seitenwände 3a, 3b so weit zusammengeschoben werden, dass die beiden Abschnitte 5a, 5b der Längsträger 5 etwa parallel verlaufen. Um eine Kollision der beiden Längsträger 5 miteinander zu vermeiden, sind die Längsträger 5 in vertikaler Richtung versetzt zueinander angeordnet. Auf diese Weise können die Längsträger 5 im eingeklappten Zustand kollisionsfrei übereinander verlaufen.

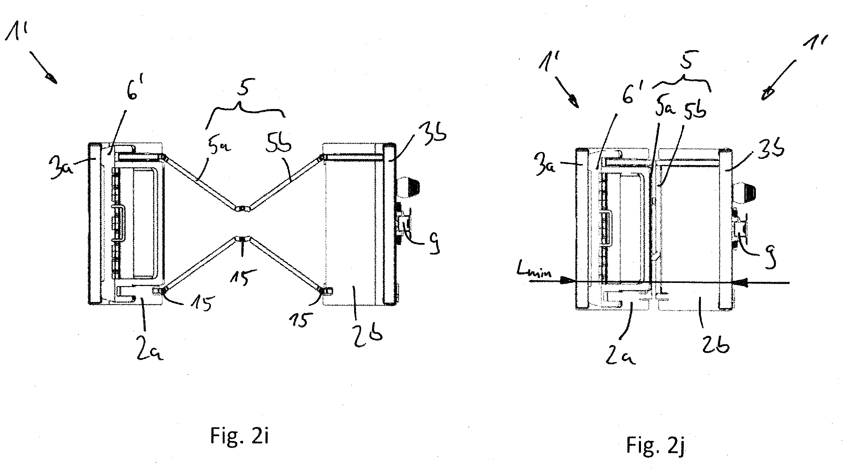

Fig. 2i zeigt die Vorrichtung 1' aus Fig. 2g in einer Draufsicht. Die bereits im Zusammenhang mit Fig. 1a bis Fig. 2h beschriebenen Bereiche der Vorrichtungen 1,1' sind in Fig. 2i mit entsprechenden Bezugszeichen versehen. Aufgrund des hochgeklappten Bodenelements 6' ist der Blick auf die unter dem Bodenelement 6' angeordneten Längsträger 5 frei. Die Längsträger 5 sind halb eingeklappt, so dass die Abschnitte 5a, 5b der Längsträger 5 nicht mehr entlang einer Linie angeordnet sind.

In Fig. 2j ist schließlich die Vorrichtung 1' aus Fig. 2h in einer Draufsicht dargestellt. Die bereits im Zusammenhang mit Fig. 1a bis Fig. 2i beschriebenen Bereiche der Vorrichtungen 1,1' sind auch in Fig. 2i mit entsprechenden Bezugszeichen versehen. Ersichtlich wurden die beiden Seitenwände 3a, 3b so weit zusammengeschoben, dass die beiden Abschnitte 5a, 5b der Längsträger 5 aneinander anliegen und parallel zueinander verlaufen. In dieser Stellung weist die Vorrichtung 1' eine minimale Länge Lₘᵢₙ auf. Vorzugsweise beträgt die minimale Länge Lₘᵢₙ höchstens 40%, insbesondere höchstens 35% oder höchstens 30% der maximalen Länge Lₘₐₓ der Vorrichtung 1 (siehe Fig. 2e).

### Bezugszeichenliste:

- 1, 1':: Vorrichtung zum Transport von Stückgütern
- 2, 2a, 2b:: Querträger
- 3, 3a, 3b:: Seitenwand
- 4:: Rolle
- 5:: Längsträger
- 6,6':: Bodenelement
- 7, 7a, 7b:: Rückwand
- 8:: Griff
- 9:: Deichsel
- 10:: Kupplung
- 11:: Kupplungspedal
- 12,12':: Bremspedal / Bremsgriff
- 13:: Bodenentriegelung
- 14:: Drehachse
- 15:: Gelenk
- 16:: Torsionsfeder
- 17:: Führung
- Lₘₐₓ:: maximale Länge (der Vorrichtung 1)
- Lₘᵢₙ:: minimale Länge (der Vorrichtung 1)

## Patentansprüche

1. Vorrichtung (1, 1') zum Transport von Stückgütern, insbesondere von Paketen oder Briefbehältern, umfassend: zwei Querträger (2a, 2b), zwei Seitenwände (3a, 3b), wenigstens drei Rollen (4) und ein Bodenelement (6, 6'), wobei mit jedem Querträger (2a, 2b) eine Seitenwand (3a, 3b) verbunden ist, wobei mit jedem Querträger (2a, 2b) wenigstens eine Rolle (4) verbunden ist, wobei das Bodenelement (6, 6') mit einem der Querträger (2a, 2b) verbunden ist, wobei die beiden Querträger (2a, 2b) derart miteinander verbunden sind, dass der Abstand zwischen den Querträgern (2a, 2b) verändert werden kann, zu welchem Zweck die beiden Querträger (2a, 2b) durch zwei Längsträger (5) miteinander verbunden sind, wobei jeder Längsträger (5) zwei Abschnitte (5a, 5b) umfasst, die gelenkig miteinander verbunden sind und wobei jeder Längsträger (5) gelenkig mit den Querträgern (2a, 2b) verbunden ist, wobei das Bodenelement (6, 6') gelenkig mit einem der Querträger (2a, 2b) verbunden und um eine horizontale Achse (14) verschwenkbar ist, wobei das Bodenelement (6, 6') aus einer horizontalen Stellung in eine vertikale Stellung geklappt werden kann,
**dadurch gekennzeichnet, dass**
die Längsträger (5) in horizontaler Stellung des Bodenelements (6, 6') unterhalb des Bodenelements (6, 6') angeordnet sind, wobei das Bodenelement (6, 6') in Längsrichtung verlaufende Führungen zur Aufnahme der Längsträger (5) aufweist und wobei die Längsträger (5) in vertikaler Richtung versetzt zueinander angeordnet sind.

2. Vorrichtung nach einem der Anspruch 1,
**dadurch gekennzeichnet, dass**
das Bodenelement (6') in Querrichtung verlaufende Führungen (17) aufweist.

3. Vorrichtung nach Anspruch 1 oder 2,
**gekennzeichnet durch**
eine Rückwand (7), die mit beiden Seitenwänden (3a, 3b) verbindbar ist.

4. Vorrichtung nach Anspruch 3,
**dadurch gekennzeichnet, dass**
die Rückwand (7) zwei Wandabschnitte (7a, 7b) umfasst, die gelenkig miteinander verbunden sind.

5. Vorrichtung nach Anspruch 4,
**dadurch gekennzeichnet, dass**
die Breite der Wandabschnitte (7a, 7b) der Rückwand (7) etwa der Länge der Abschnitte (5a, 5b) der Längsträger (5) entspricht.

6. Vorrichtung nach einem der vorhergehenden Ansprüche,
**gekennzeichnet durch**
einen Griff (8), der mit einer der Seitenwände (3a, 3b) verbunden ist, insbesondere gelenkig verbunden ist.

7. Vorrichtung nach einem der vorhergehenden Ansprüche,
**gekennzeichnet durch**
eine Bremseinrichtung, insbesondere eine Feststellbremse, die auf wenigstens eine der Rollen (4) einwirkt und ein Bremspedal (12) und/oder einen Bremsgriff (12') aufweist.

8. Vorrichtung nach Anspruch 6 und 7,
**dadurch gekennzeichnet, dass**
der Bremsgriff (12') der Bremseinrichtung an dem Griff (8) angeordnet ist.

9. Vorrichtung nach einem der vorhergehenden Ansprüche,
**dadurch gekennzeichnet, dass**
wenigstens eine Rolle (4) als Lenkrolle ausgeführt ist.

10. Vorrichtung nach einem der vorhergehenden Ansprüche,
**gekennzeichnet durch**
eine Deichsel (9) zur Kopplung mehrerer Vorrichtungen (1, 1').

11. Vorrichtung nach einem der vorhergehenden Ansprüche,
**gekennzeichnet durch**
eine Kupplung (10) zur Kopplung mehrerer Vorrichtungen (1, 1').

## Claims

1. A device (1, 1') for transporting piece goods, in particular parcels or letter containers, comprising: two crossbeams (2a, 2b), two side walls (3a, 3b), at least three rollers (4) and a bottom element (6, 6'), wherein one side wall (3a, 3b) is connected with each crossbeam (2a, 2b), wherein at least one roller (4) is connected with each crossbeam (2a, 2b), wherein the bottom element (6, 6') is connected with one of the crossbeams (2a, 2b), wherein the two crossbeams (2a, 2b) are connected to each other such that the distance between the crossbeams (2a, 2b) can be modified, for which purpose the two crossbeams (2a, 2b) are connected to each other by means of two longitudinal beams (5), wherein each longitudinal beam (5) comprises two sections (5a, 5b) which are connected to each other in an articulated manner and wherein each longitudinal beam (5) is connected to the crossbeams (2a, 2b) in an articulated manner, wherein the bottom element (6, 6') is connected to one of the crossbeams (2a, 2b) in an articulated manner and can be pivoted around a horizontal axis (14), wherein the bottom element (6, 6') can be flapped from a horizontal position into a vertical position,
**characterized in that**
in the horizontal position of the bottom element (6, 6'), the longitudinal beams (5) are arranged beneath the bottom element (6, 6'), wherein the bottom element (6, 6') comprises guides which extend in the longitudinal direction for receiving the longitudinal beams (5), and wherein the longitudinal beams (5) are offset with respect to each other in the vertical direction.

2. A device according to claim 1,
**characterized in that**
the bottom element (6') comprises guides (17) that extend in the transverse direction.

3. A device according to claim 1 or 2,
**characterized by**
a rear wall (7) which can be connected to both side walls (3a, 3b).

4. A device according to claim 3,
**characterized in that**
the rear wall (7) comprises two wall sections (7a, 7b) which are connected to each other in an articulated manner.

5. A device according to claim 4,
**characterized in that**
the width of the wall sections (7a, 7b) of the rear wall (7) approximately corresponds to the length of the sections (5a, 5b) of the longitudinal beams (5).

6. A device according to one of the preceding claims,
**characterized by**
a handle (8) which is connected to one of the side walls (3a, 3b), in particular connected in an articulated manner.

7. A device according to one of the preceding claims,
**characterized by**
a braking device, in particular a locking brake, which acts upon at least one of the rollers (4) and comprises a brake pedal (12) and/or a brake lever (12').

8. A device according to claims 6 and 7,
**characterized in that**
the brake lever (12') of the braking device is arranged on the handle (8).

9. A device according to one of the preceding claims,
**characterized in that**
at least one roller (4) is designed as a castor.

10. A device according to one of the preceding claims,
**characterized by**
a drawbar (9) for coupling several devices (1, 1').

11. A device according to one of the preceding claims,
**characterized by**
a coupling (10) for coupling several devices (1, 1').

## Revendications

1. Dispositif (1, 1') de transport de marchandises de détail, notamment de colis ou de conteneurs de courrier, comprenant : deux traverses (2a, 2b), deux parois latérales (3a, 3b), au moins trois rouleaux (4) et un élément de fond (6, 6'), une paroi latérale (3a, 3b) étant reliée à chaque traverse (2a, 2b), au moins un rouleau (4) étant relié à chaque traverse (2a, 2b), l'élément de fond (6, 6') étant relié à l'une des traverses (2a, 2b), les deux traverses (2a, 2b) étant reliées l'une à l'autre, de sorte que la distance entre les traverses (2a, 2b) peut être modifiée, à quelle fin les deux traverses (2a, 2b) sont reliées l'une à l'autre par moyen de deux poutres longitudinales (5), chaque poutre longitudinale (5) comprenant deux sections (5a, 5b), qui sont reliées l'une à l'autre de manière articulée et chaque poutre longitudinale (5) étant reliée aux traverses (2a, 2b) de manière articulée, l'élément de fond (6, 6') étant relié à l'une des traverses (2a, 2b) de manière articulée et étant susceptible d'être pivoté autour d'un axe horizontal (14), l'élément de fond (6, 6') pouvant être replié à partir d'une position horizontale dans une position verticale,
**caractérisé en ce que**
dans la position horizontale de l'élément de fond (6, 6') les poutres longitudinales (5) sont disposées au-dessous de l'élément de fond (6, 6'), l'élément de fond (6, 6') comprenant des guides, qui s'étendent dans la direction longitudinale, pour recevoir les poutres longitudinales (5) et les poutres longitudinales (5) étant disposées de manière décalée l'une par rapport à l'autre dans la direction verticale.

2. Dispositif selon la revendication 1,
**caractérisé en ce que**
l'élément de fond (6') comprend des guides (17), qui s'étendent dans la direction transversale.

3. Dispositif selon la revendication 1 ou la revendication 2,
**caractérisé par**
une paroi arrière (7), qui est susceptible d'être reliée aux deux parois latérales (3a, 3b).

4. Dispositif selon la revendication 3,
**caractérisé en ce que**
la paroi arrière (7) comprend deux sections de paroi (7a, 7b), qui sont reliées l'une à l'autre de manière articulée.

5. Dispositif selon la revendication 4,
**caractérise en ce que**
la largeur des sections de paroi (7a, 7b) de la paroi arrière (7) correspond approximativement à la longueur des sections (5a, 5b) des poutres longitudinales (5).

6. Dispositif selon l'une des revendications précédentes,
**caractérisé par**
une poignée (8), qui est reliée à l'une des parois latérales (3a, 3b), notamment de manière articulée.

7. Dispositif selon l'une des revendications précédentes,
**caractérisé par**
un dispositif de freinage, notamment un frein de stationnement, qui agit sur au moins l'un des rouleaux (4) et qui comprend une pédale de frein (12) et/ou un levier de frein (12').

8. Dispositif selon la revendication 6 et la revendication 7,
**caractérisé en ce que**
le levier de frein (12') du dispositif de freinage est disposé sur la poignée (8).

9. Dispositif selon l'une des revendications précédentes,
**caractérisé en ce que**
au moins un rouleau (4) est configuré comme une poulie de guidage.

10. Dispositif selon l'une des revendications précédentes,
**caractérisé par**
une barre de traction (9) pour coupler plusieurs dispositifs (1, 1') les uns aux autres.

11. Dispositif selon l'une des revendications précédentes,
**caractérisé par**
un accouplement (10) pour coupler plusieurs dispositifs (1, 1') les uns aux autres.
